# EUROPEAN PATENT SPECIFICATION

(11) **EP 3 933 365 B1**
(45) Date of publication and mention of the grant of the patent: **01.03.2023**
(21) Application number: 20183823.2
(22) Date of filing: 02.07.2020
(51) Int. Cl.: G01L 1/26, G01L 1/14, G01L 1/18, G01L 5/00, G01G 23/00

(54) **FORCE SENSOR ASSEMBLY AND A METHOD FOR MEASURING A FORCE**
KRAFTSENSORANORDNUNG UND VERFAHREN ZUM MESSEN EINER KRAFT
ENSEMBLE DE CAPTEUR DE FORCE ET PROCÉDÉ DE MESURE D'UNE FORCE

(43) Date of publication of application: 05.01.2022
(73) Proprietor: TE Connectivity Solutions GmbH, 8200 Schaffhausen (CH)
(72) Inventor: JENNI, Kaspar, 2022 Bevaix Neuenburg (CH)
(74) Representative: Grünecker Patent- und Rechtsanwälte PartG mbB

(56) References cited:
- US-A1- 2011 179 886
- US-A1- 2014 230 574
- US-A1- 2020 158 583

## Description

The invention relates to a force sensor assembly and a method for measuring a force.

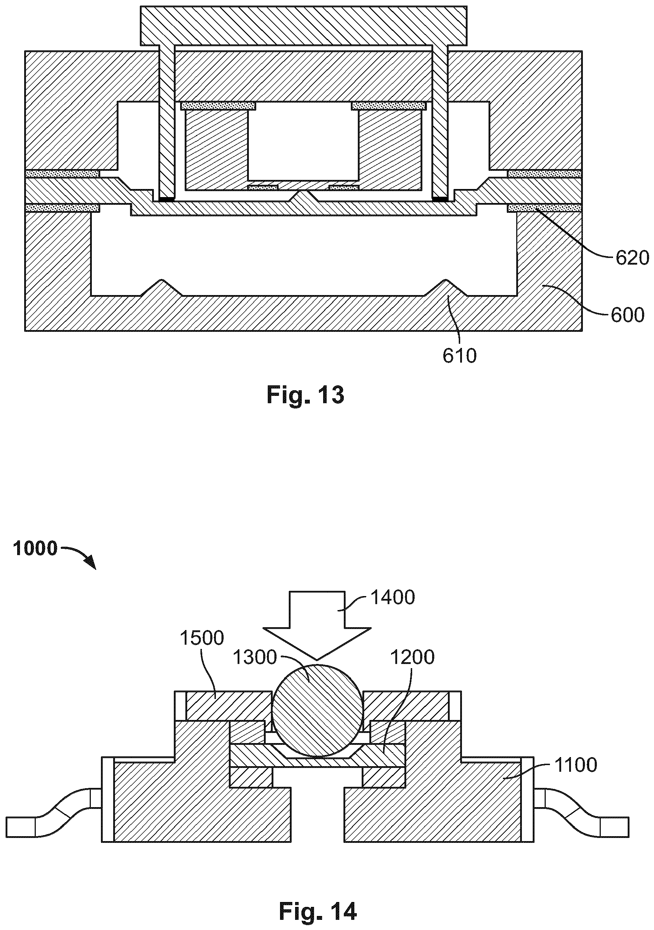

A force sensor measures the tension and compression forces, which act on the sensor. Fig. 14 shows a force sensor assembly according to the state of the art.

The force sensor assembly 1000 comprises a substrate 1100, a force sensor unit 1200 and a transducer element 1300. The transducer element 1300, which is according to Fig. 14 a ball, transmits the force 1400 to the force sensor unit 1200. The application of force 1400 causes that a parameter of the force sensor unit changes. Thereby, the amount of force applied to the force sensor assembly can be determined.

The transducer element 1300 enables transducing the force 1400 to a well-defined region on the force sensing unit 1200. In other words, a point of contact is defined between the transducer element 1300 and the force sensing unit 1200. For example, in the case of a ball as shown in Fig. 14, the transduced force is applied at a central part of the force senor unit 1200. Such a force transducing element allows precise measurements of a force in a direction normal to the surface of the force sensor unit 1200.

The substrate 1100 serves as a mounting platform for the force sensing unit 1200 and guiding element for the force transducing element 1300. Therefore, a stable and precise mounting of the force sensing unit 1200 and the force transducing element 1300 is possible.

The force sensor assembly 1000 further comprises a guiding element 1500. The guiding element 1500 guides the movement of the ball 1300 in the vertical direction, and prevents it from falling out. The ball 1300 can move slightly in the vertical direction, typically by around 0.05 mm. Because the ball 1300 is guided in the vertical direction, only the vertical force is transmitted to the force sensor unit 1200.

Further, for the endurance of the force sensor it is necessary that a wear-free mechanical contact between force transduction element 1300 and a sensing surface is provided.

US 2020/158583 A1 relates to a load sensor unit that includes an operating part movable forward and backward in a first direction; a load sensor that has a pressure receiving part and outputs a signal according to a load received in the first direction by the pressure receiving part; a linking part that has one end part linked to the operating part and another end part that causes the pressure receiving part to operate and is movable forward and backward in the first direction in synchronization with the operating part; and an elastic member that gives biasing force to the other end part of the linking part and gives an initial load to the pressure receiving part through the other end part.

US2011179886 A1 relates to a compressive force measurement device with a pressure-/voltage converter in chip technology features a spherical segment-shaped sensor area. The pressure-/voltage converter is disposed between one base disc and one cover disc, wherein the base disc and the cover disc are tensioned against one another by means of springs with essentially identical pulling force. Forces acting on the cover disc have the effect that the cover disc always positions itself perpendicularly to the direction of force, whereby some of the springs are additionally loaded and others are relieved and thereby a compensation of forces takes place that act obliquely on the compressive force measurement device.

The object of the invention is to provide a solution for a force sensor assembly that overcomes the disadvantages of damage by an over force. Further, an object of the present invention is a force sensor that enables a high performance in view of measurement accuracy. A further object is a force sensor that can be realized at low cost. A further object is that a small size force sensor can be realized. A further object is that the force sensor can exploit existing technologies for sensing the force. A further object is that the sensor is wear-free.

For example, the object are sensors that require high performance or unique packaging, including electro-mechanical flight control, test and measurement and ultra-low cost load cells for medium to high volumes.

This object is solved by the independent claims. Advantageous embodiments are solved by the dependent claims.

According to an embodiment, a force sensor assembly for measuring an effective force comprises a force sensor mounted on a substrate. The force sensor being adapted for outputting a measurement signal based on an effective force.

The force sensor produces an electrical signal depending on the applied effective force. For example, the force sensor includes an integral diaphragm having at least one piezo-resistive element. The at least one resistive element exhibits a varying resistance responsive to deflection and/or stress of the diaphragm. When a force is exerted on the membrane of the force sensor, an electrical signal through piezo-resistive elements formed in the upper surface of the diaphragm of the force sensor varies responsive to variations in the piezo-resistive elements. Alternatively, the force sensor comprises a piezoceramic element, the application of force produces a charge distribution that is proportional to the force. According to a further example, a force sensing capacitor can form a force sensor. A force sensing capacitor comprises a material whose capacitance changes when a force, pressure or mechanical stress is applied. They are also known as "force-sensitive capacitors". Consequently, the applied force can be transformed in an electrical signal.

Further, the force sensor assembly comprises a force transducer for transducing an externally applied force to the force sensor. The force transducer transfers mechanically the externally applied force. A force transducer enables that at a predefined area, ideally at a point like contact region, force is transferred to the force sensor. In particular, the force transducer is a ball, a rod or a pin element. Such a transducer element allows that the measurement accuracy is improved.

Additionally, the force sensor assembly according to the present embodiment comprises a spring element connected between the substrate and the force transducer, the spring element for providing a preload force pressing the force transducer to the force sensor. A spring is an elastic object that stores mechanical energy. Springs are made from a variety of elastic materials, the most common being spring steel. Usually a conventional spring, without stiffness variability features, is compressed or stretched from its resting position, it exerts an opposing force approximately proportional to its change in length (this approximation breaks down for larger deflections). This is commonly known as "Hooke's law".

Such a spring element is mounted between the transducer element and the substrate. Such a configuration enables to provide a preload force. Without external force applied to the force sensor assembly, the spring presses the transducer element to the force sensor. In this configuration, which may be seen as the rest position, the force sensor experiences a maximum effective force. In other words, the force sensor experiences a maximal predetermined deformation or stress. Such a configuration allows that at the manufacturer side the maximal deformation is applied to the force sensor. Therefore, this configuration allows to shift the overload protection problem to the spring element, which is made from an elastic material. On the other hand, the force sensor does not experience overload. Such a configuration allows to protect the force sensor, which usually is made of a brittle material such as silicon. In particular, silicon breaks sharply without much of a plastic deformation.

Further, according to the present invention, the measurement signal depends on a superposition of the externally applied force and the preload force. The superposition principle, also known as superposition property, states that, for all linear systems, the net response caused by two or more stimuli is the sum of the responses that would have been caused by each stimulus individually. So that if input A produces response X and input B produces response Y then input (A + B) produces response (X + Y). In the present case, the externally applied force is transduced by the force transducer and applied to the force sensor. The preload force, which is caused by the spring element, is superposed to the externally applied force. The preload force is defined by the spring element and is predetermined, i.e. can for example be measured by the manufacturer. Thus, by analyzing the measurement signal, which is based on the effective force, i.e. the superposed externally applied force and the preload force, the externally applied force can be determined by a liner operation considering the preload force.

Advantageously, the force sensor assembly is a microelectromechanical systems (MEMS) or a nanoelectromechanical systems (NEMS). The related micromechatronics and microsystems constitute the technology of microscopic devices, particularly those with moving parts. NEMS are made up of components between 1 and 100 micrometers in size and MEMS devices generally range in size from 20 micrometers to a few millimeters. Even more advantageously, the force sensor assembly has a size that is larger than or equal to 0.5 mm. Additionally or alternatively, the force sensor assembly has a size that is less than or equal to 2 mm.

According to the embodiment the assembly further comprises a guiding element for guiding the transducing element, wherein the transduced effective force acts opposite to the preload force. Such a configuration allows to only transduce the force in the direction normal to the surface of the sensor, minimizing any parasitic effects forces in other directions would have.

The guiding element is a passage in the substrate or a sliding element on a circumferential edge of the substrate. In more detail, the substrate, which preferably is made of a rigid material such as a silicon wafer, co-fired ceramic substrate, PCB, or machined metal header, serves as a mounting platform which guides relative movements between the force transducer, the force sensor, and the spring element. Such a configuration allows particularly precise measurements.

Even more advantageously, the transducing element comprises a button element extending in a direction parallel the surface of the substrate. Such a configuration allows that the substrate limits the movement of the force transducer because the button element is extending from the transducing arm.

Additionally or alternatively, the force sensor comprises a semiconductor sensor unit for changing an electrical parameter of the semiconductor sensor unit by application of force. Such a semiconductor sensor unit, e.g. a piezo resistive sensor or a force sensing capacitor, allows particularly precise sensor devices.

Advantageously, the force sensor comprises support means through which the semiconductor sensor unit is connected to the substrate. Such a configuration allows a particularly easy connection of the force sensor to the substrate. Furthermore, such a configuration allows that the semiconductor sensor unit, which may be also described as a membrane, is supported by a structure.

For example, the semiconductor sensor unit is a piezoresistive silicon strain gage (Microfused) technology. Such a configuration combines durability and long-term stability in extremely low cost packages.

A strain gage (also spelled strain gauge) is a device used to measure strain on an object. The most common type of strain gauge, for example a piezo resistive strain gauge, comprises an insulating flexible backing which supports a metallic foil pattern or a semiconductor material which changes in resistance when stretched or compressed. The gauge is attached to the object by a suitable adhesive, such as cyanoacrylate or glass frit, which is commonly used for piezo resistive gauges. As the object is deformed, the foil is deformed, causing its electrical resistance to change. This resistance change, usually measured using a Wheatstone bridge, is related to the strain by the quantity known as the gauge factor.

Additionally or alternatively, the force sensor is etched from a monocrystalline silicon die. Such a configuration allows fabricating the semiconductor sensor and the support structure within one process.

Additionally or alternatively, the spring element is made of spring steel. Such a configuration allows providing a particularly economic spring material. Even more advantageously, the spring element comprises a connection part for contenting the spring element to the substrate, wherein the connection part is clamped, soldered, or glued to the substrate. Such a configuration allows a particularly robust connection to the substrate.

Alternatively, within a silicon die the spring element is formed. Such a configuration allows that the force transducer and the spring element are fabricated as one part. Advantageously, the silicon die comprises recesses forming the spring element. Such a configuration allows a particularly economic fabrication of the spring element, for example by a layer etching process. Even more advantageously, the silicon die comprises a connection part for connecting the silicon die to the substrate, wherein the connecting part is bonded, soldered or glued to the substrate. Such a configuration allows a particularly robust connection to the substrate.

Additionally or alternatively, the force sensor assembly comprises a stop element for limiting the movement of the spring element. Such a configuration allows to protect the spring element from damage in case a overload is applied. Advantageously, the stop element is connected to the substrate. Such a configuration allows a particularly robust arrangement of the force sensor assembly.

According to a further embodiment, a method for measuring a force comprises the step of
- determining, with a force sensor assembly in line with the above, a measurement signal.

Advantageously, the method comprises the step of
- correcting the measurement signal based on a spring rate of the spring element.

The rate or spring constant of a spring is the change in the force it exerts, divided by the change in deflection of the spring. That is, it is the gradient of the force versus deflection curve. An extension or compression spring's rate is expressed in units of force divided by distance, for example or N/m or Ibf/in.

Such a method allows a particularly precise measurement.

The invention will now be described in greater detail and in an exemplary manner using advantageous embodiments and with reference to the drawings. The described embodiments are only possible configurations in which, however, the individual features as described above can be provided independently of one another or can be omitted.

In the figures,
- **FIG. 1**: is a schematic side view of a force sensor assembly according to a first embodiment;
- **FIG. 2**: is schematic side view of the force sensor assembly of Fig. 1 when a force smaller than a threshold force is applied;
- **FIG. 3**: is schematic side view of the force sensor assembly of Fig. 1 when a force equal to a threshold force is applied;
- **FIG. 4**: is schematic side view of the force sensor assembly of Fig. 1 when a force larger than a threshold force is applied;
- **FIG. 5**: is a schematic side view of a force sensor assembly according to a first embodiment with a capacitive force sensor;
- **FIG. 6**: is schematic side view of the force sensor assembly of Fig. 5 when a force smaller than a threshold force is applied;
- **FIG. 7**: is schematic side view of the force sensor assembly of Fig. 5 when a force equal to a threshold force is applied;
- **FIG. 8**: is schematic side view of the force sensor assembly of Fig. 5 when a force larger than a threshold force is applied;
- **FIG. 9**: is a schematic side view of a force sensor assembly according to a second embodiment;
- **FIG. 10**: is a schematic side view of a force sensor assembly according to a third embodiment;
- **FIG. 11**: is a schematic side view of a force sensor assembly according to a fourth embodiment;
- **FIG. 12**: is a schematic top view of a spring element according to the fourth embodiment;
- **FIG. 13**: is a schematic side view of a force sensor assembly according to a fifth embodiment; and
- **FIG. 14**: is a schematic side view of a force sensor assembly according to the state of the art.

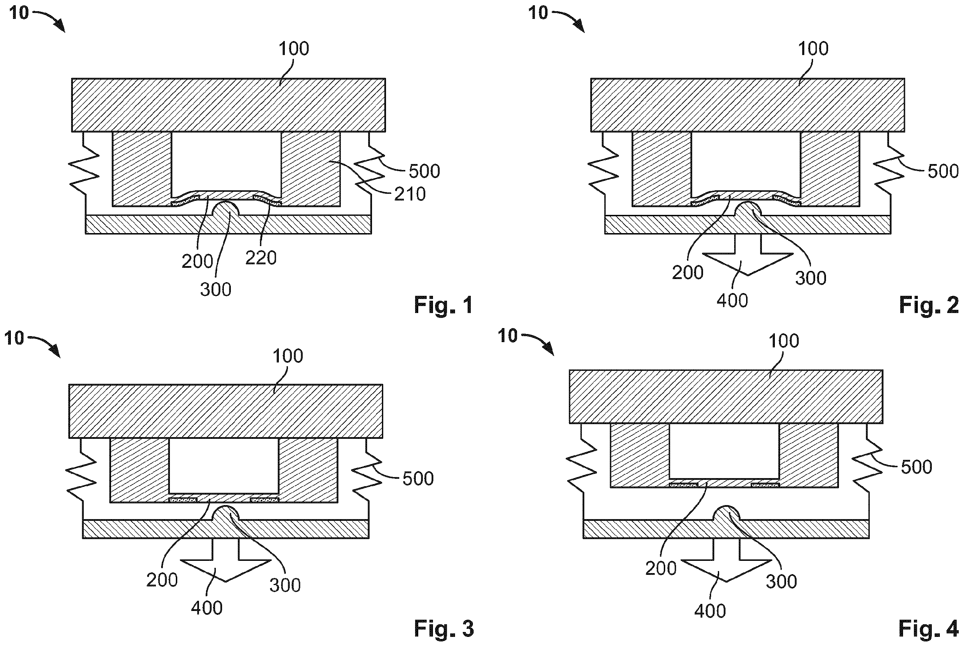

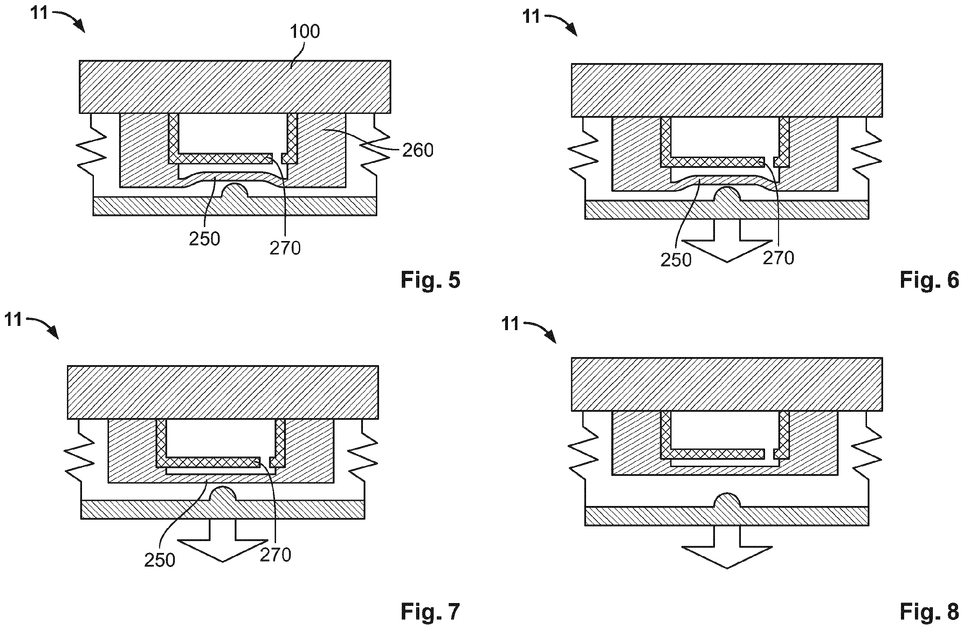

The present invention will now be explained in more detail with reference to the Figures. Referring to Figs. 1 and 5, a schematic side view of a force sensor assembly 10, 11 for measuring an effective force according to a first embodiment is described.

The force sensor assembly 10, 11 comprises a force sensor mounted on a substrate 100, the force sensor for outputting a measurement signal based on the effective force. Further, the force sensor comprises support means 210, 260 through which the force sensor is connected to the substrate.

Advantageously, the force sensor is a semiconductor sensor unit 200, 250 for changing an electrical parameter of the semiconductor sensor unit 200, 250 by application of force.

For example, as shown in Figs. 1 and 5, the force sensor may be seen as a membrane 200, 250 supported by the two support means 210, 260, respectively. As further shown, by the bending of the semiconductor sensor unit 200, 250, the force can be measured. If the force sensor comprises a semiconductor sensor unit 200, 250, electrical parameters may change due to the bending of the semiconductor sensor unit. Such a configuration enables a particularly precise measurement of the applied force. According to one embodiment, the force sensor with the semiconductor sensor unit, 200, 250 and the support means 210 is etched from a monocrystalline silicon die.

In more detail, Figs. 1 to 4 show a force sensor with piezo resistive semiconductor unit 200. The basic principle of the piezo resistive sensor 200 is to use a strain gauge made from a conductive material that changes its electrical resistance when it is stretched. The strain gauge 200 can be attached to a diaphragm 220 that recognizes a change in resistance when the sensor element 200 is deformed. The change in resistance is converted to an output signal, the measurement signal.

Alternatively, as shown in Figs. 5 to 8, a force sensor can be realized with a force-sensing capacitor. The force sensing capacitor is a made of an assembly whose capacitance changes when a force is applied. For example, as shown in Figs. 5 to 8, a first capacitor plate 250 is bent when force is applied. The opposing second capacitor plate 270 rests in the initial position. Thereby the capacitance is changed. Force sensing capacitors are also known as "force-sensitive capacitors". They can provide improved sensitivity and repeatability compared to force-sensitive resistors but traditionally required more complicated electronics.

Further, the force sensor assembly 10, 11 of Figs. 1 and 5 further comprises a force transducer 300 for transducing an external force to the force sensor. The external force being zero in Figs. 1 and 5. As shown in Figs. 1 and 5, the force transducer 300 is a half sphere attached to a plate. Preferably, the plate is made of stiff material. Therefore, the force transducer 300 and the force sensor have a point like connection. Such a configuration enables a precise spatial application of the force to the force sensor. Thus, the precision of the force sensor assembly 10, 11 can be improved.

The force sensor assembly 10, 11 further comprises a spring element 500 connected between the substrate 100 and the force transducer 300, the spring element 500 for providing a preload force pressing the force transducer 300 to the force sensor. In particular, as shown in Figs. 1 and 5, in case of an externally applied force being zero, the force sensor is bent by the preload force caused by the spring element 500.

In particular, in the arrangement shown in Figs. 1 and 5, the measurement signal indicates a maximal deformation of the semiconductor sensor unit 210, 250. In particular, an effective force applied to the sensor is maximal. Considering the superposition of the preload force, the externally applied force is measured to be zero.

Further, with reference to Figs. 2 and 6 a schematic side view of the force sensor assembly 10, 11 is shown when a non zero external force 400 is applied. In more detail, Figs. 2 and 6 are the same as respective Figs. 1 and 5 except that a reduced effective force (not shown) is acting on the force sensor. In particular, the external force 400 is smaller than a threshold force. The threshold being later explained with reference to Fig. 3. In more detail, the non zero externally applied force 400 changes the bending of the force sensor. In particular, in case of the semiconductor sensor unit 200 of Fig. 2 the piezo resistive membrane is bent. Alternatively, in case of the semiconductor sensor unit 250 of Fig. 6 the first capacitor plate is bent.

The non zero externally applied force 400 is effecting in a direction that is opposite to the preload force (not shown) caused by the spring element 500. Therefore, the bending of the force sensor is reduced. The effective force, which is a superposition of the preload force and the externally applied force 400, is subject to the measurement. Therefore, the force sensor assembly 10, 11 determines that the external force 400 is applied.

Further, Figs. 3 and 7 show a schematic side view of the force sensor assembly 10, 11 of respective Figs. 1 and 5, when an external force 400 that is equal to a threshold force is applied. In more detail, Figs. 3 and 7 are the same as respective Figs. 2 and 6 except that the preload force of the spring element 500 equals the external force 400. Consequently, the effective force (not shown) is zero and the force sensor is not bent. In other words, the force sensor is in a relaxed position. In particular, in case of the semiconductor sensor unit 200 of Fig. 3, the piezo resistive membrane is relaxed. Alternatively, in case of the semiconductor sensor unit 250 of Fig. 7, the first capacitor plate 250 is parallel to the second capacitor plate 270.

For a matter of presentation only, namely showing that elements 200 and 300 are separable, in Figs. 1 to 3 and Figs. 5 to 7 the elements 300 and 200 are set slightly apart. In line with the above description, in order to transfer a force, the elements need to be in direct contact (not shown) or in indirect contact, for example by a not shown transducer element interposed between elements 200 and 300.

Further, the transducer element 300 is still in contact with the force sensor. This position defines the threshold force. In other words, the threshold force defines the measurement range of the force sensor assembly 10, 11.

Further, Figs. 4 and 8 show a schematic side view of the force sensor assembly 10, 11 of respective Figs. 1 and 5, when an external force 400 larger than the threshold force is applied. In other words, Figs. 4 and 8 show the case of applying an over force to the transducer element 300. The effective force (not shown), however, does not act in the direction of the force sensor. Therefore, if an external force 400, which is larger than the threshold force is applied, the force sensor is not bent. In other words, due to the spring element 500, the force sensor is protected from over forces. Instead, these over forces act on the elastic spring element 500, which is unlikely to break.

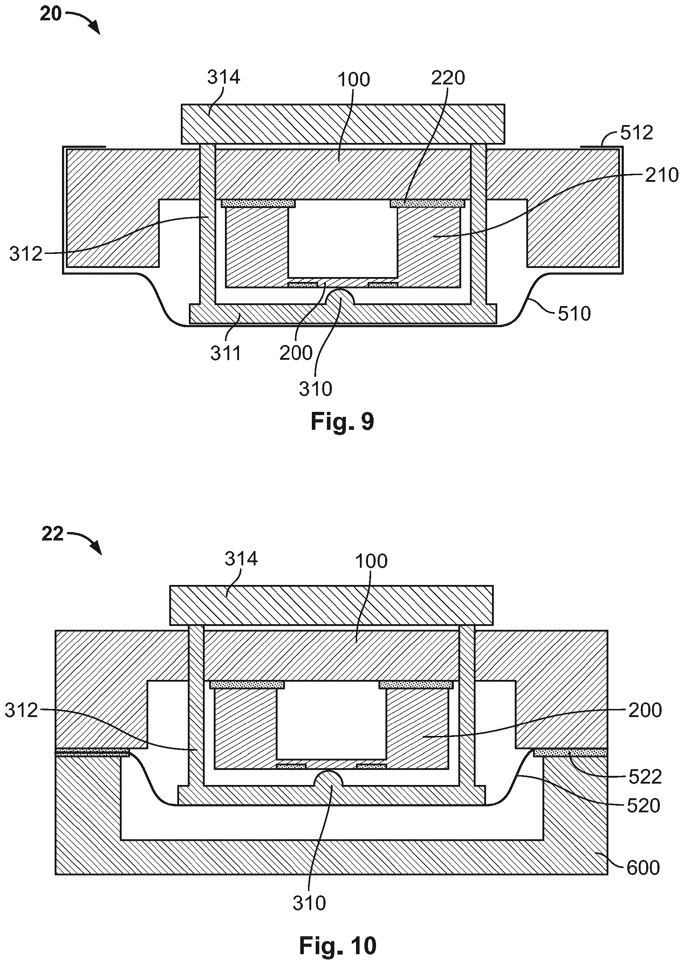

Further, Fig. 9 is a schematic side view of a force sensor assembly 20 according to a second embodiment. Similar structural elements of the force sensor assembly 20 of the second embodiment are indicated with the same reference signs as in the above description of the force sensor assembly 10, 11 of the first embodiment described with reference to Figs. 1 to 8. A description of these elements is omitted.

Fig. 9 shows a spring element 510 that is clamped by a clamping portion 512 to the substrate 100. Advantageously, the spring element 510 and/or the clamping portion 512 are made of spring steel. The clamping portion 512 is clipped to the substrate 100. Using steel allows a particularly economic fabrication. Clamping the clamping portion 512 to the substrate 100 avoids the need of a gluing or bonding step for mounting the spring element 510 to the substrate 100.

Further, Fig. 9 details that the transducer element 310 is provided on a transducer plate 311. Transducer arms 312 connectable to a button element 314 are connectable to the transducer plate 311. Advantageously, the transducer element 310, the transducer plate 311 and the transducer arms 312 are made from a stiff material. Additionally or alternatively, the connection between the transducer arms 312 and the button element 314 is stiff. Even more advantageously, the transducer element 310, the transducer plate 311 and the transducer arms 312 are formed as one part. Such a configuration allows a direct application of the externally applied force to the force sensor without the need of taking care of deformations.

Further, the substrate comprises a guiding element for guiding the transducing arms 312 and thereby the thereto connectable transducing element 310. As shown in Fig. 9, the transduced effective force acts opposite to the preload force caused by the spring element 510.

Advantageously, as shown in Fig. 9, the guiding element is a passage in the substrate 100. Such a configuration allows a particularly simple mounting of the parts forming the force sensor assembly. Furthermore, such a configuration allows that the substrate 100 limits the movement of the force transducer 311 because button element 314 is extending from the transducing arms 312.

Further, Fig. 10 is a schematic side view of a force sensor assembly 22 according to a third embodiment. Similar structural elements of the force sensor assembly 22 of the third embodiment are indicated with the same reference signs as in the above description of the force sensor assembly 10, 11 of the first embodiment described with reference to Figs. 1 to 8 or force the sensor assembly 20 of the second embodiment described with reference to Fig. 9 and a description thereof is omitted.

In particular, Fig. 10 shows a spring element 520 that is soldered or glued by a connection portion 522 to the substrate 100. Additionally or alternatively, the connection portion 522 is clamped between the substrate 100 and a stop element 600.

For a matter of presentation only, in Fig. 10 the connection of spring element 520 to connection portion 522 is different on both sides. In general, it can be either top, bottom or middle of element 522. According to an advantageous not shown embodiment, the connection of 520 and 522 is identical on both sides.

The stop element 600 limits the movement of the transducer plate in the direction of the externally applied force. In addition, it provides cover from the environment (dust and water) and protects the force sensor die from any ingress that would damage it.

Advantageously, the spring element 520 and/or the connection portion 522 are made of spring steel. The connection portion 522 is glued to the substrate 100 and/or clamped between the substrate and the stop element 600. Using steel allows a particularly economic fabrication. Gluing and clamping the connection portion 522 enables a particularly stable connection.

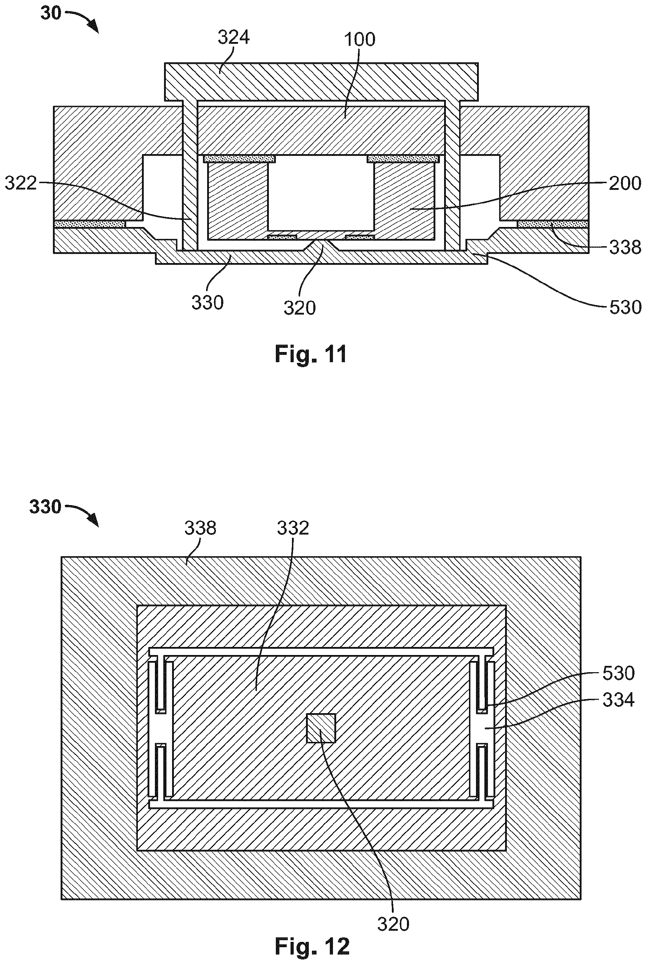

Further, Figs. 11 to 13 show a force sensor assembly 30 according to a fourth embodiment. Similar structural elements of the force sensor assembly 30 of the fourth embodiment are indicated with the same reference signs as in the above description of the force sensor assembly 10, 11 of the first embodiment described with reference to Figs. 1 to 8, the force the sensor assembly 20 of the second embodiment described with reference to Fig. 9, or the force the sensor assembly 22 of the third embodiment described with reference to Fig. 10, and a description thereof is omitted.

In more detail, Fig. 11 shows a schematic side view of a force sensor assembly 30 according to the fourth embodiment. The force sensor assembly 30 comprises a silicon die 330 comprising the spring element 530. In other words, the spring element 530 is formed within the silicon die 330.

A top view of the silicon die 330 is shown in Fig 12. In more detail, the silicon die 330 comprises recesses 334 or a through hole forming an elastic section in the silicon die 330. Thereby, the spring element 530 is formed. In other words, the silicon die 330 comprises a section wherein the material is thinned. For example, beside the serpentine shown in Fig. 12, a beam or a membrane, or a combination of beam, membrane and serpentine spring can form the spring element. The defining characteristic of a beam is that it needs to be more flexible than the plate 332, and that its spring rate must be controllable by manufacturing process, which is for example the case for monocrystalline silicon.

Further, the silicon die 330 comprises the transducing element 320, which is similar to the transducing element 300 described above.

Further, the silicon die 330 comprises a transducer plate section 332, which is similar to the transducer plate 311 described above. In particular, arms 322 of the button 324 are connectable to the transducer plate section 332 thereby transferring the externally applied force. Alternatively, according to a not shown embodiment, arms may be formed within the transducer plate section 332.

Further, the silicon die 330 comprises a support structure 338, for example a frame, for gluing the silicon die 333 to the substrate.

Further, as shown in Fig 13, the force sensor assembly 30 comprises a stop element 600. The stop element 600 comprises notches 610 for limiting the movement of the transducer plate section 332 in the direction of the externally applied force. Consequently, the spring 530 can be protected from expiring an over load.

Further, the stop element 600 comprises a stop element connection part 620 for connecting, e.g. by bonding or gluing, it to the silicon die 330.

According to the above-described embodiment, the stop element is connected via a connecting part of the spring element to the substrate. Alternatively, a stop element can be directly connected to the substrate.

Even if not described with reference to the Figures 9 to 13, the force sensor may be any semiconductor sensor, in particular a capacitive force sensing element.

According to alternative embodiment, not shown in Figures, the force sensor may be a different type of sensor. For example, an optical unit can be used for measuring the applied force, i.e. the bending of force sensor. For example, the deformation of the force sensor can be measured by interferometric or deflectometric optical sensor means.

According to an alternative embodiment, not shown in Figures, the force transducer may be a ball, a rod, a pin, or a pyramid. Any force transducer providing a point like interconnection enables improving the precision of the measurement result.

**REFERENCE NUMERALS**

| **Reference Numeral** | **Description** |
|---|---|
| 10, 11, 20, 22, 30 | Force sensor assembly |
| 100 | Substrate |
| 200, 250 | Semiconductor force sensor |
| 210, 260 | Support means |
| 220 | diaphragm |
| 270 | Second capacitor plate |
| 300, 310, 320 | Transducer element |
| 311 | Transducer plate |
| 312 | Transducer arms |
| 314, 324 | Button element |
| 322 | Arms |
| 330 | Silicon die |
| 332 | Transducer plate section |
| 334 | recesses |
| 338 | Support structure |
| 400 | Force |
| 500, 510, 520, 530 | Spring element |
| 512 | Clamping portion |
| 522 | Connecting portion |
| 600 | Stop element |
| 610 | notches |
| 620 | Stop element connection part |
| 1000 | Force sensor assembly |
| 1100 | Substrate |
| 1200 | Force sensor unit |
| 1300 | Transducer element |
| 1400 | Force |
| 1500 | Guiding element |

## Claims

1. Force sensor assembly (10) for measuring an effective force, the force sensor assembly comprising:
a force sensor (200) mounted on a substrate (100), the force sensor for outputting a measurement signal based on the effective force;
a force transducer (300) for transducing an externally applied force (400) to the force sensor;
a spring element (500) connected between the substrate (100) and the force transducer (300), the spring element (500) for providing a preload force pressing the force transducer (300) to the force sensor (200);
wherein the measurement signal depends on a superposition of the externally applied force (400) and the preload force,
a connecting part of the spring element is mounted to the substrate,
a guiding element for guiding the transducing element (300), wherein the externally applied force acts opposite to the preload force,
wherein the guiding element is a passage in the substrate (100) or a sliding element on a circumferential edge of the substrate (100).

2. Force sensor assembly (10) according to claim 1, wherein the force sensor comprises a semiconductor sensor unit (200) for changing an electrical parameter of the semiconductor sensor unit by application of force.

3. Force sensor assembly (10) according to claim 2, wherein the force sensor comprises support means (210) through which the semiconductor sensor unit (200) is connected to the substrate (100).

4. Force sensor assembly (10) according to any preceding claim, wherein the force sensor (200) is etched from a monocrystalline silicon die or etched in silicon carbide.

5. Force sensor assembly (20,22) according to any preceding claim, wherein the spring element (510, 520) comprises spring steel, phosphor bronze or titanium.

6. Force sensor assembly according to claim 5, wherein the connection part (512, 522) for connecting the spring element (510, 520) to the substrate (100), wherein the connection part is clamped, soldered, bonded, or glued to the substrate.

7. Force sensor assembly (30) according to any of claims 1 to 4, wherein within a silicon die (330) the spring element (530) is formed.

8. Force sensor assembly (30) according to claim 7, wherein the silicon die (330) comprises recesses (334) or a through hole forming the spring element (530).

9. Force sensor assembly (30) according to claim 7 or 8, wherein the silicon die (330) comprises a connection part (338) for connecting the silicon die (330) to the substrate (100), wherein the connecting part (338) is bonded, soldered or glued to the substrate.

10. Force sensor assembly (10) according to any preceding claim, further comprising a stop element (600) for limiting the movement of the spring element (500).

11. Force sensor assembly according to claim 10, wherein the stop element (600) is connected to the substrate (100).

12. Method for measuring a force comprising the step of
Determining, with a force sensor assembly according to any of the preceding claims, a measurement signal.

13. Method for measuring the force according to claim 12, comprising the steps of Correcting the measurement signal based on a rate of the spring element.

## Patentansprüche

1. Kraftsensoranordnung (10) zum Messen einer effektiven Kraft, wobei die Kraftsensoranordnung umfasst:
einen Kraftsensor (200), der auf einem Substrat (100) montiert ist, wobei der Kraftsensor zur Ausgabe eines Messsignals auf der Grundlage der effektiven Kraft dient;
einen Kraftwandler (300) zum Übertragen einer von außen angelegten Kraft (400) auf den Kraftsensor;
ein Federelement (500), das zwischen dem Substrat (100) und den Kraftwandler (300) verbunden ist, wobei das Federelement (500) dazu dient, eine Vorspannkraft bereitzustellen, die den Kraftwandler (300) auf den Kraftsensor (200) drückt;
wobei das Messsignal von einer Überlagerung der von außen angelegten Kraft (400) und der Vorspannkraft abhängt,
ein Anschlussteil des Federelements auf dem Substrat montiert ist,
ein Führungselement zum Führen des Kraftwandlers (300), wobei die von außen angelegten Kraft entgegengesetzt zur Vorspannkraft wirkt,
wobei das Führungselement ein Durchgang im Substrat (100) oder ein Gleitelement an einem Umfangsrand des Substrats (100) ist.

2. Kraftsensoranordnung (10) nach Anspruch 1, wobei der Kraftsensor eine Halbleitersensoreinheit (200) zur Änderung eines elektrischen Parameters der Halbleitersensoreinheit durch Krafteinwirkung aufweist.

3. Kraftsensoranordnung (10) nach Anspruch 2, wobei der Kraftsensor ein Trägermittel (210) umfasst, durch das die Halbleitersensoreinheit (200) mit dem Substrat (100) verbunden ist.

4. Kraftsensoranordnung (10) nach einem der vorhergehenden Ansprüche, wobei der Kraftsensor (200) aus einem monokristallinen Siliziumchip geätzt oder in Siliziumkarbid geätzt ist.

5. Kraftsensoranordnung (20, 22) nach einem der vorangehenden Ansprüche, wobei das Federelement (510, 520) aus Federstahl, Phosphorbronze oder Titan besteht.

6. Kraftsensoranordnung nach Anspruch 5, wobei das Verbindungsteil (512, 522) zum Verbinden des Federelements (510, 520) mit dem Substrat (100) verbunden ist, wobei das Verbindungsteil an das Substrat geklemmt, gelötet, gebondet oder geklebt ist.

7. Kraftsensoranordnung (30) nach einem der Ansprüche 1 bis 4, wobei das Federelement (530) innerhalb eines Siliziumchips (330) ausgebildet ist.

8. Kraftsensoranordnung (30) nach Anspruch 7, wobei der Siliziumchip (330) Ausnehmungen (334) oder ein Durchgangsloch aufweist, die das Federelement (530) bilden.

9. Kraftsensoranordnung (30) nach Anspruch 7 oder 8, wobei der Siliziumchip (330) ein Verbindungsteil (338) zum Verbinden des Siliziumchips (330) mit dem Substrat (100) aufweist, wobei das Verbindungsteil (338) mit dem Substrat gebondet, gelötet oder geklebt ist.

10. Kraftsensoranordnung (10) nach einem der vorhergehenden Ansprüche, ferner mit einem Anschlagelement (600) zur Begrenzung der Bewegung des Federelements (500).

11. Kraftsensoranordnung nach Anspruch 10, wobei das Anschlagelement (600) mit dem Substrat (100) verbunden ist.

12. Verfahren zum Messen einer Kraft, umfassend den Schritt
Ermitteln eines Messsignals mit einer Kraftsensoranordnung nach einem der vorhergehenden Ansprüche.

13. Verfahren zur Messung der Kraft nach Anspruch 12, mit den Schritten Korrigieren des Messsignals in Abhängigkeit von einer Rate des Federelements.

## Revendications

1. Ensemble capteur de force (10) pour mesurer une force effective, l'ensemble capteur de force comprenant :
un capteur de force (200) monté sur un substrat (100), le capteur de force étant destiné à délivrer en sortie un signal de mesure sur la base de la force effective ;
un transducteur de force (300) pour transduire une force appliquée de l'extérieur (400) au capteur de force ;
un élément de ressort (500) relié entre le substrat (100) et le transducteur de force (300), l'élément de ressort (500) étant destiné à fournir une force de précharge pressant le transducteur de force (300) sur le capteur de force (200) ;
dans lequel le signal de mesure dépend d'une superposition de la force appliquée de l'extérieur (400) et de la force de précharge,
une partie de liaison de l'élément de ressort est montée sur le substrat,
un élément de guidage pour guider l'élément transducteur (300), dans lequel la force appliquée de l'extérieur agit à l'opposé de la force de précharge,
dans lequel l'élément de guidage est un passage dans le substrat (100) ou un élément coulissant sur un bord circonférentiel du substrat (100).

2. Ensemble capteur de force (10) selon la revendication 1, dans lequel le capteur de force comprend une unité de capteur à semi-conducteur (200) pour modifier un paramètre électrique de l'unité de capteur à semi-conducteur par application d'une force.

3. Ensemble capteur de force (10) selon la revendication 2, dans lequel le capteur de force comprend un moyen de support (210) à travers lequel l'unité de capteur à semi-conducteur (200) est reliée au substrat (100).

4. Ensemble capteur de force (10) selon l'une des revendications précédentes, dans lequel le capteur de force (200) est gravé à partir d'une puce de silicium monocristallin ou gravé dans du carbure de silicium.

5. Ensemble capteur de force (20, 22) selon l'une des revendications précédentes, dans lequel l'élément de ressort (510, 520) comprend de l'acier à ressort, du bronze phosphoreux ou du titane.

6. Ensemble capteur de force selon la revendication 5, dans lequel la partie de liaison (512, 522) est destinée à relier l'élément de ressort (510, 520) au substrat (100), dans lequel la partie de liaison est serrée, soudée, liée ou collée au substrat.

7. Ensemble capteur de force (30) selon l'une des revendications 1 à 4, dans lequel l'élément de ressort (530) est formé à l'intérieur d'une puce de silicium (330).

8. Ensemble capteur de force (30) selon la revendication 7, dans lequel la puce de silicium (330) comprend des évidements (334) ou un trou traversant formant l'élément de ressort (530).

9. Ensemble capteur de force (30) selon la revendication 7 ou 8, dans lequel la puce de silicium (330) comprend une partie de liaison (338) pour relier la puce de silicium (330) au substrat (100), dans lequel la partie de liaison (338) est liée, soudée ou collée au substrat.

10. Ensemble capteur de force (10) selon l'une des revendications précédentes, comprenant en outre un élément de butée (600) pour limiter le déplacement de l'élément de ressort (500).

11. Ensemble capteur de force selon la revendication 10, dans lequel l'élément de butée (600) est relié au substrat (100).

12. Procédé de mesure d'une force comprenant l'étape consistant à déterminer, avec un ensemble capteur de force selon l'une des revendications précédentes, un signal de mesure.

13. Procédé de mesure de la force selon la revendication 12, comprenant l'étape consistant à
corriger le signal de mesure sur la base d'une raideur de l'élément de ressort.
